# DEMANDE DE BREVET EUROPEEN

(11) **EP 0 539 292 A1**
(43) Date de publication de la demande: **28.04.1993**
(21) Numéro de dépôt: 92402881.4
(22) Date de dépôt: 22.10.1992
(51) Int. Cl.: G02F 1/015

(54) **Modulateur électro-optique semiconducteur à puits de potentiel**

(30) Priorité: 24.10.1991 FR 9113146
(71) Demandeur: ALCATEL N.V., NL-1077 XX Amsterdam (NL)
(72) Inventeur: Nicolardot, Marc, F-91650 Breuiller (FR); Dupertuis, Marc-André, CH-1015 Lausanne (CH)
(74) Mandataire: Bourely, Paul

(57) **Abrégé**

Une structure modulatrice de ce dispositif comporte des couches superposées connues dont les fonctions sont les suivantes : Un réservoir (1R1) contient des électrons qu'une tension de commande peut injecter dans un puits quantique (1P) pour commander les propriétés optiques de ce puits. Le courant est limité par une barrière (1B) dont la résistance électrique est accrue par une raréfaction locale des électrons sous l'effet d'une charge d'espace négative (1B3). Selon l'invention la barrière (1B) forme en outre une charge d'espace positive (1B1) plus petite que la charge d'espace négative (1B3) et située entre cette dernière et le réservoir (1R1) pour accroître encore cette résistance.

L'invention s'applique notamment dans les réseaux de télécommunication utilisant une lumière guidée.

## Description

La présente invention concerne un dispositif électro-optique semi-conducteur modulable à puits de potentiel. De manière générale une structure modulatrice d'un tel dispositif est constituée d'une succession de couches superposées. Une de ces couches constitue un réservoir contenant des porteurs portant des charges d'un premier signe. L'application d'une tension de commande permet d'injecter ces porteurs dans un puits de potentiel constitué par une autre couche. Cette tension commande alors la densité des porteurs dans ce puits et par conséquent aussi une caractéristique optique de ce puits. Le courant interne induit par cette tension est limité par une barrière dont la résistance électrique est accrue par une raréfaction de ces porteurs sous l'effet d'une charge d'espace de ce premier signe.

Un tel dispositif peut notamment constituer un modulateur de lumière ou un laser semi-conducteur comportant, outre une section de modulation constituée par une telle structure modulatrice, une section amplificatrice pour engendrer une onde lumineuse.

Dans des modulateurs connus de ce genre le puits de potentiel est un puits quantique et les porteurs de charge sont des électrons. Leur structure semi-conductrice, c'est-à-dire la succession des couches semi-conductrices qui les constituent est internationalement appelée structure "Braqwet". Le sigle "Braqwet" se réfère à l'expression anglaise "Barrier, Reservoir And Quantum Well Electron Transfer" qui signifie "Transfert d'électrons à l'aide d'une barrière, d'un réservoir et d'un puits quantique". Une telle structure est décrite dans un article "Absorption and réfraction spectroscopy of a tunable-electron-density quantum-well and reservoir structure". (Phys.Rev B, Vol 41 n° 5, 15 Fev. 1990-1, M. Wegener, J.E. Zucker, T.Y. Chang, N.J. Sauer, K.L. Jones, and D.S. Chemla) et dans un brevet US-A 5 034 783 (Chang). Elle permet d'obtenir une variation d'indice de réfraction ou d'absorption optique sous l'effet d'une commande électrique. Cette variation est localisée dans le puits quantique.

La réponse courant-tension de la structure Braqwet dépend beaucoup des matériaux utilisés. Des démonstrations expérimentales satisfaisantes ont été faites dans les systèmes de matériaux InGaAs/InGaAlAs/InAlAs (voir le premier document indiqué ci-dessus) et GaAs/Ga₁₋ₓA₁ₓAs (O. Blum, J.E. Zucker, T. Y. Chang, N.J. Sauer, M.- Divino, K.L. Jones, T. K. Gustavson, Quantum Electronics, 11-13 March 1991, Saltlake city, Tu D8-1/177).

D'autres démonstrations ont été faites dans le système InGaAsP/InP (N. Agrawal, D. Hoffmann, D. Franke, and K.C. Li, V. Clemens, A. Witt, and M. WEGENER, ECOC, Paris sept.91). Mais leurs auteurs ont indiqué oralement que les courants internes apparaissant dans ce système étaient importants.

De manière générale il y a intérêt à diminuer l'intensité d'un tel courant interne pour diminuer la puissance électrique consommée et dissipée dans une telle structure modulatrice.

La présente invention a notamment les buts suivants :
- Diminuer la puissance électrique consommée dans une structure modulatrice à puits de potentiel.
- Permettre de choisir la caractéristique courant-tension d'une telle structure, ceci indépendamment des caractéristiques optiques de cette structure. Ce choix peut alors être guidé soit par la recherche d'une réduction du courant, donc de la puissance de commande, soit par la recherche du courant assurant la meilleure stabilité de fonctionnement (liée à la bonne répartition de la tension appliquée entre chaque couple réservoir/puits dans le cas d'une structure semi-conductrice à puits multiples).
- Faciliter la réalisation d'une telle structure dans certains systèmes de matériaux tels que le système InGaAs/InGaAsP/InP dans lesquels les courants internes ont semblé devoir être trop importants.

Selon cette invention, dans une telle structure modulatrice, la barrière comporte une charge d'espace du deuxième signe plus petite que la charge d'espace du premier signe et située entre cette dernière et le réservoir. Le choix de ces deux charges d'espace et de la distance qui les sépare permet alors de donner une valeur optimale à la résistance de la barrière.

A l'aide des figures schématiques ci-jointes, on va décrire plus particulièrement ci-après, à titre d'exemple non limitatif, comment la présente invention peut être mise en oeuvre. Lorsqu'un même élément est représenté sur plusieurs figures il y est désigné par le même signe de référence. Il doit être compris que les éléments mentionnés peuvent être remplacés par d'autres éléments assurant les mêmes fonctions techniques.

La figure 1 représente une vue en coupe d'un modulateur selon la présente invention.

La figure 2 représente un diagramme de niveaux d'énergie d'une structure Braqwet transposée à partir de celle d'un modulateur connu, ce diagramme étant établi en l'absence de tension de commande.

La figure 3 représente un diagramme de niveaux d'énergie de cette structure transposée en présence d'une tension de commande.

La figure 4 représente un diagramme de niveaux d'énergie d'une structure Braqwet du modulateur de la figure 1 en présence d'une tension de commande.

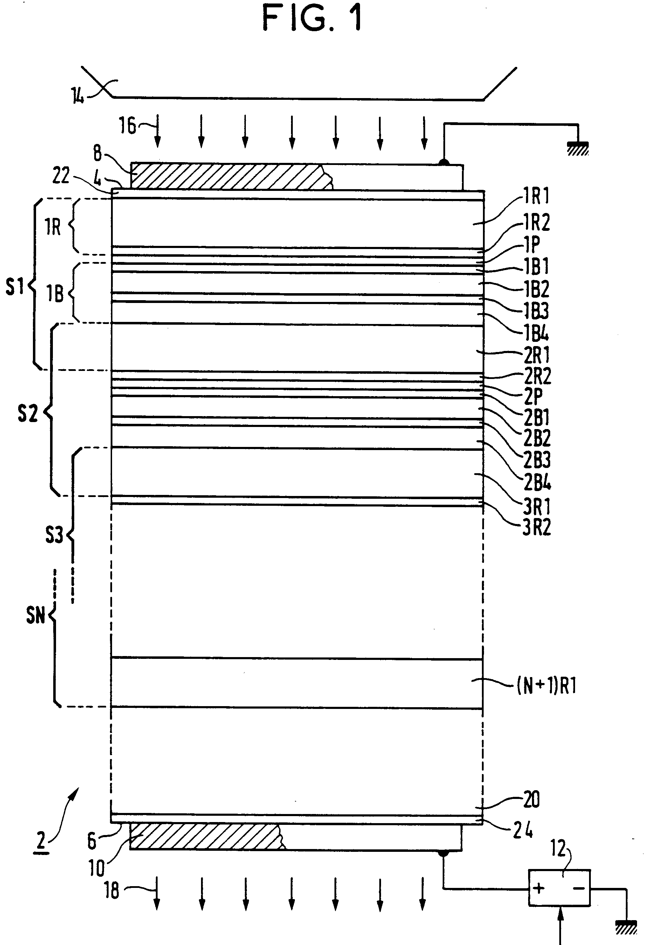

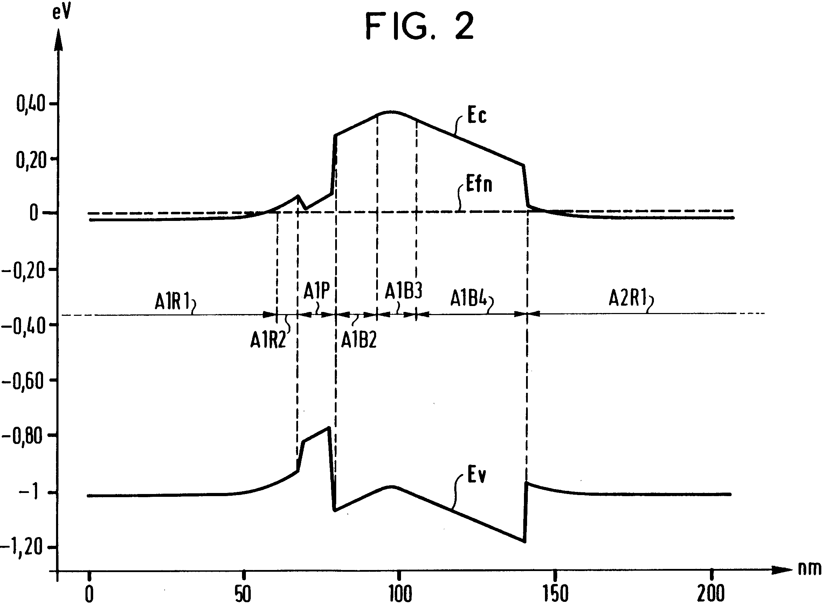

On va tout d'abord décrire certains éléments essentiels qui sont communs, quant à leurs fonctions indiquées, audit modulateur connu et au modulateur selon la présente invention. Ces éléments vont être décrits en se référant à la figure 1 et, éventuellement, à titre d'alternative, à la figure 2. Un tel élément commun est une plaquette 2 constituée de couches de divers matériaux semi-conducteurs superposées en continuité cristalline. Chacun de ces matériaux a une bande interdite qui est un intervalle d'énergie interdit aux électrons et qui présente une largeur propre à ce matériau. Ces matériaux peuvent conduire le courant électrique par des porteurs d'un premier ou d'un deuxième type portant respectivement des charges électriques d'un premier ou d'un deuxième signe. L'un de ces types est constitué par des électrons portant des charges négatives, l'autre par des trous portant des charges positives. Ces matériaux peuvent présenter un dopage d'un premier ou d'un deuxième type apte à fournir, respectivement, des porteurs du premier ou du deuxième type. Ces couches forment une succession de couches selon un ordre de succession allant d'arrière en avant à partir d'une face arrière 4 jusqu'à une face avant 6 de cette plaquette. Cette succession contient au moins une fois une structure élémentaire S1 constituée par quatre groupes de couches comportant chacun au moins une couche. Ces groupes et ces couches présentent l'ordre de succession suivant :
- Un groupe réservoir 1R constitué d'un premier matériau dont la bande interdite présente une première largeur LR. Ce groupe comporte une couche 1R1 ou A1R1 présentant un dopage du premier type suffisant pour la rendre conductrice. Cette couche constitue un réservoir pour fournir des porteurs du premier type.
- Un groupe constituant un puits 1P ou A1P. Ce puits est formé d'un deuxième matériau dont la bande interdite présente une deuxième largeur LP plus petite que la première. Ce puits est un puits de potentiel et comporte une couche.
- Une barrière 1B constituée d'un troisième matériau dont la bande interdite présente une troisième largeur LB plus grande que la première. Cette barrière comporte une couche antérieure de barrière 1B2 ou A1B2, puis une couche présentant un dopage du deuxième type et constituant une couche de charge du premier signe 1B3 ou A1B3, puis une couche postérieure de barrière 1B4 ou A1B4.
- Et un groupe constituant un récepteur 2R1 ou A2R1 et formé d'un matériau dont la bande interdite présente une largeur LR supérieure à la deuxième et inférieure à la troisième. Ce groupe comporte une couche présentant un dopage du premier type suffisant pour la rendre conductrice et recueillir les porteurs du premier type.

Les dopages et les épaisseurs du réservoir 1R1 ou A1R1 et du récepteur 2R1, A2R1 sont choisis suffisamment grands et le dopage et l'épaisseur de la couche de charge du premier signe 1B3 ou A1B3 sont choisis suffisamment petits pour que les porteurs de charge présents dans cette plaquette soient sensiblement seulement du premier type. Il en résulte que ladite couche de charge du premier signe présente une charge d'espace localisée du premier signe d'autant plus grande que son dopage et son épaisseur sont plus grands. La barrière 1B présente alors une charge d'espace globale du premier signe résultant de la présence de cette charge d'espace localisée.

Cette charge d'espace globale du premier signe est choisie suffisamment grande pour que le puits soit sensiblement vide de porteurs en l'absence de courant électrique.

La troisième largeur de bande interdite LB et cette charge d'espace globale du premier signe sont choisies suffisamment grandes pour que la barrière 1B présente une résistance électrique.

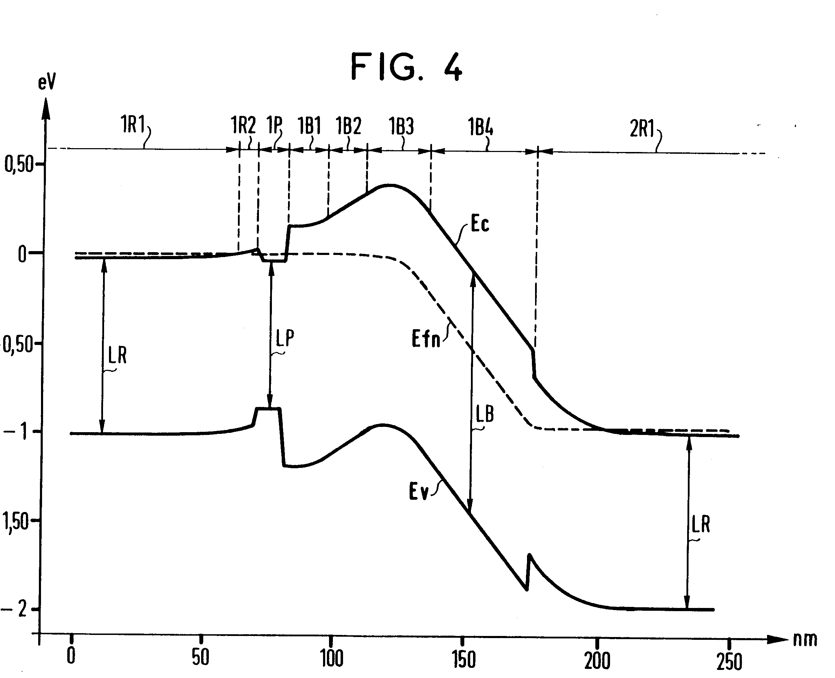

Les couches mentionnées ci-dessus apparaîssent non seulement, sur les figures 1 et 4 représentant la présente invention, leurs signes de référence étant alors ceux indiqués ci-dessus sans la lettre A, mais aussi sur la figure 2 qui est relative à une structure transposée d'une structure connue et sur laquelle les signes de référence sont les mêmes que sur les figures 1 et 4 sauf qu'ils sont précédés de la lettre A.

Le modulateur comporte d'autres éléments communs qui sont les suivants :
- Deux électrodes arrière 8 et avant 10 sur ses faces arrière 4 et avant 6, respectivement.
- Une source électrique commandable 12 pour appliquer une tension de commande de cette électrode avant vers cette électrode arrière de manière qu'un courant électrique interne injecte des porteurs du premier type dans le puits à partir du réservoir. Ces porteurs sont évacués de ce puits vers le récepteur à travers la barrière. L'intensité de ce courant est donc limitée par la résistance électrique de la barrière.
- Et des moyens de guidage de lumière 14 pour diriger un faisceau lumineux incident 16 vers le puits. Ce faisceau traverse ce puits et en ressort sous la forme d'un faisceau émergent 18 modulé en intensité et/ou direction et/ou phase par la tension de commande.

La lumière peut être guidée dans le plan des couches ou peut traverser les couches perpendiculairement comme représenté sur la figure 1.

Les éléments autres que des couches n'apparaissent pas sur la figure 2 mais ils sont identiques dans les deux modulateurs considérés.

Le modulateur donné en exemple de mise en oeuvre de la présente invention se distingue essentiellement du modulateur connu précédemment mentionné par la disposition nouvelle suivante :
La barrière 1B comporte en outre une couche de charge du deuxième signe 1B1 précédant la couche antérieure de barrière 1B2. Cette couche de charge présente un dopage du premier type pour faire apparaître une charge d'espace localisée du deuxième signe d'autant plus grande que le dopage et l'épaisseur de cette couche de charge sont plus grands. La charge d'espace localisée du deuxième signe est choisie plus petit que cette charge d'espace localisée du premier signe. La charge d'espace globale du premier signe précédemment mentionnée est alors constituée par la somme algébrique de cette charge d'espace localisée du premier signe et de cette charge d'espace localisée du deuxième signe. Grâce à un accroissement de la charge d'espace localisée du premier signe, la charge d'espace globale de la barrière peut être la même que dans le modulateur connu précédemment mentionné. L'accroissement de la résistance de la barrière résulte d'une élévation de la limite inférieure de l'énergie de la bande de conduction dans la plus grande partie de la barrière. Ceci résulte du champ électrique que la séparation des charges d'espace des deux signes tend à faire apparaître dans la couche antérieure de barrière. En effet cette élévation d'énergie ne s'accompagne pas d'un accroissement équivalent du niveau de Fermi des porteurs du premier type. Elle a donc pour conséquence une raréfaction supplémentaire de ces porteurs alors que ceux ci sont les seuls porteurs susceptibles de faire circuler le courant électrique interne à travers le groupe barrière.

On va maintenant décrire de manière plus spécifique le modulateur donné en exemple de la présente invention tout en le comparant au modulateur connu précédemment mentionné. Dans ces deux modulateurs les porteurs du premier type sont des électrons. Le dopage du premier type est donc un dopage n et les charges du premier signe sont négatives.

Le puits de potentiel 1P présente une épaisseur suffisamment petite et la deuxième largeur de bande interdite LP est suffisamment petite pour supprimer un degré de liberté des porteurs du premier type pouvant s'y trouver. Ce puits constitue alors un puits quantique et la structure élémentaire décrite ci-dessus constitue une structure Braqwet.

Le groupe réservoir 1R comporte, en avant du réservoir 1R1 ou A1R1 une couche de sortie de réservoir 1R2 ou A1R2 présentant une résistivité.

La structure semi-conductrice comporte une succession de structures élémentaires et le récepteur de chaque structure élémentaire telle que S1, sauf la dernière, est constitué par le réservoir 2R1 ou A2R1 de la structure suivante.

La plaquette 2 se compose de couches planes semi-conductrices épitaxiées sur un substrat 20 dopé n faiblement résistif. La tension de commande est appliquée par l'intermédiaire des électrodes 8 et 10 et de couches de contact épitaxiées 22 et 24. Entre le substrat et la couche épitaxiée 22 se trouve une succession périodique de couches. Chaque période est constituée par une structure Braqwet élémentaire.

La lumière que l'on veut moduler traverse la structure perpendiculairement aux couches à travers des électrodes transparentes telles que les électrodes 8 et 10. Elle pourrait aussi la traverser dans le plan des couches. Dans ce dernier cas, la structure jouerait le rôle de guide d'onde.

La structure Braqwet élémentaire se compose d'un empilement de quatre groupes de couches. On représente cette structure par le diagramme des bandes d'énergie suivant la direction perpendiculaire au plan des couches. Ce diagramme permet d'expliquer le fonctionnement électro-optique et la réponse courant-tension. Le quatrième groupe de couches c'est-à-dire le récepteur, appartient en réalité à la période suivante, mais il est commode de le considérer pour expliquer le fonctionnement de la structure, ce qui va être d'abord fait en se référant au cas de la figure 2.

Sur les figures 2, 3 et 4 les distances constituées par l'épaisseur des couches sont portées en abscisses et les niveaux d'énergie des électrons sont portés en ordonnées. La limite inférieure de la bande de conduction, la limite supérieure de la bande de valence et le niveau de Fermi des électrons sont représentés par des courbes Ec (trait continu), Ev (trait continu) et Efn (trait tireté), respectivement.

La structure transposée représentée à la figure 2 est analogue à la structure élémentaire d'un modulateur connu dont elle ne différe que par le fait qu'elle est réalisée dans le même système de matériaux que la structure élémentaire du modulateur donné en exemple de la présente invention, c'est-à-dire dans le système InGaAs/InGaAsP/InP alors que la structure élémentaire du modulateur connu était réalisée dans le système de matériaux InGaAs/InGaAlAs/InAlAs.

On va maintenant indiquer les compositions de base, les épaisseurs et, entre parenthèses, les dopages des couches de cette structure transposée en respectant l'ordre des groupes de couches et des couches.
- Groupe réservoir d'électrons :: GA₁₋ₓInₓAs_{y}P_{1-y} (y=0,55).
Couche A1R1 : 65 nm (dopée n=5.10¹⁷cm⁻³).
Couche A1R2 : 5 nm (non dopée).
- Groupe puits quantique :: Ga₁₋ₓInₓAs_{y}P_{1-y} (y=0,83).
Couche A1P : 10 nm (non dopée).
- Groupe barrière :: InP.
Couche A1B2 : 15 nm (non dopée).
Couche A1B3 : 7 nm (dopée p= 10¹⁸cm⁻³).
Couche A1B4 : 40 nm (non dopée).

La couche A2R1 est identique à la couche A1R1.

Dans cette structure transposée et dans la structure selon la présente invention le choix des matériaux, épaisseurs et dopages est tel que la bande de valence est totalement remplie d'électrons, et le fonctionnement de la structure repose uniquement sur les variations de densité électronique dans la bande de conduction.

En l'absence de tension appliquée, le puits quantique ne contient pas d'électrons parce que la limite inférieure Ec de la bande de conduction, c'est-à-dire plus précisément le niveau fondamental d'électrons du puits, se trouve au dessus du niveau de Fermi Efn des électrons. Dans ces conditions, le seuil d'absorption optique est égal à l'écart d'énergie entre ce niveau fondamental d'électrons et le niveau fondamental de trous du puits quantique représenté par la limite supérieure Ev de la bande de valence.

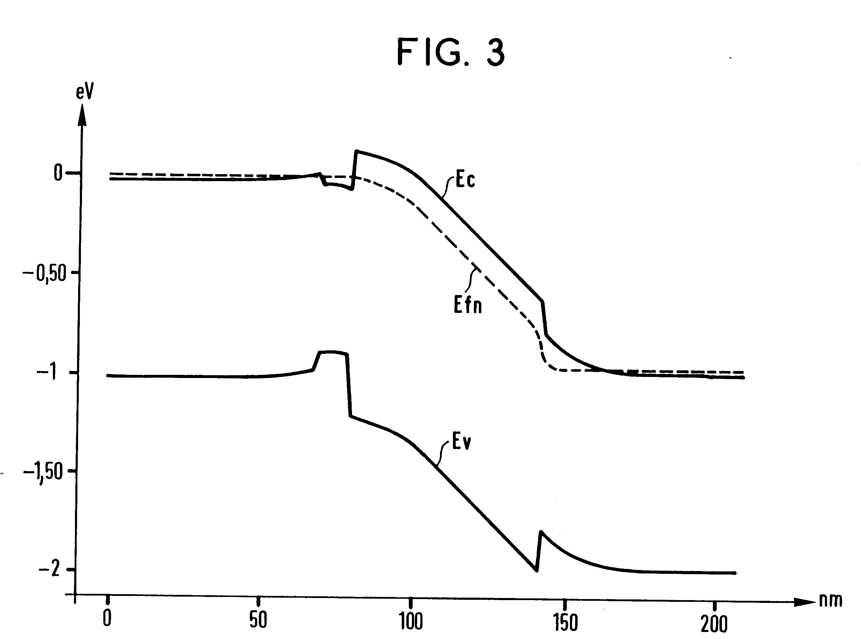

Lorsqu'on applique une tension de commande perpendiculairement aux couches, le puits se remplit d'électrons parce que le niveau fondamental d'électrons du puits se trouve alors au dessus du niveau de Fermi des électrons. Dans ces conditions, le seuil d'absorption optique s'élève pour devenir égal à l'écart d'énergie entre le niveau de Fermi d'électrons et le niveau fondamental de trous. Cette situation est représentée sur la figure 3 pour la structure transposée et sur la figure 4 pour la sructure selon la présente invention.

Il en résulte que l'application d'une tension de commande élève le seuil d'absorption de la structure.

Pour des énergies de photons au voisinage du seuil d'absorption, l'application d'une tension réduit l'absorption. Pour des énergies de photons inférieures au seuil d'absorption, l'application d'une tension réduit l'indice de réfraction. On peut citer à ce sujet un article "Large Refractive Index Changes in Tunable-Electron-Density InGaAs/InA1As Quantum Wells" (J.E.ZUCKER, T.Y. CHANG, M. WEGENER, N.J. SAUER. K.L. JONES, D.S. CHEMLA) (IEEE Photonics Technology Letters, vol 2, N°1, junuary 1990).

L'effet de remplissage du puits quantique décrit ci-dessus est renforcé par l'effet Stark qui est un effet d'un champ électrique transverse sur la position des niveaux quantifiés tels que Ec et Ev.

La résistance électrique de la structure est déterminée principalement par la résistivité de la barrière. Cette résistivité augmente de façon sensiblement exponentielle avec l'écart entre la limite inférieure Ec de la bande de conduction et le niveau de Fermi d'électrons. Cet écart est à peu près égal à la variation de cette limite inférieure Ec entre la barrière et le réservoir d'électrons. Dans le cas des matériaux InP et GaInAsP, cet écart est plus faible que dans celui des matériaux InA1As et GaInA1As, ce qui explique l'apparition de courants internes plus élevés dans le premier de ces cas.

La présente invention propose une modification de la structure élémentaire pour améliorer sa caractéristique courant-tension en augmentant cette résistance et en diminuant donc ce courant interne.

Selon un mode de mise en oeuvre de cette invention on introduit une couche de charge 1B1 dopée n dans la barrière d'InP, et on augmente l'épaisseur de la couche de charge 1B3 dopée p.

La couche 1B1 crée une charge d'espace localisée positive. La charge d'espace globale négative de la barrière est cependant conservée grâce à l'augmentation correspondante de la charge d'espace localisée négative créée par la couche 1B3. La structure ainsi réalisée est représentée sur la figure 4. Les compositions de base, épaisseurs et dopages de cette structure vont être maintenant indiqués comme précédemment.
- Groupe réservoir d'électrons 1R :: GA₁₋ₓInₓAs_{y}P_{1-y} (y=0,55).
Couche A1R1 : 65 nm (dopée n=5.10¹⁷cm⁻³).
Couche A1R2 : 7 nm (non dopée).
- Groupe puits quantique :: Ga₁₋ₓInₓAs_{y}P_{1-y} (y=0,83).
Couche 1P : 10 nm (non dopée).
- Groupe barrière :: InP.
Couche 1B1 : 18 nm (dopée n=5.10¹⁷cm⁻³).
Couche 1B2 : 15 nm (non dopée).
Couche 1B3 : 20 nm (dopée p = 10¹⁸cm⁻³).
Couche 1B4 : 40 nm (non dopée).

Couche 2R1 identique à la couche 1R1.

A titre d'alternative la couche 1P pourrait répondre à la formule Ga₁₋ₓInₓAs.

Les électrons issus des donneurs de la nouvelle couche de charge positive 1B1 dopée n de la barrière sont transférés spatialement vers les accepteurs de la couche de charge négative dopée p 1B3. Il en résulte un champ électrique entre ces couches et un potentiel électrostatique qui se superpose aux variations d'énergie de ladite structure transposée. On peut noter que les charges d'espace formées dans ces couches font apparaître des courbes paraboliques dans les diagrammes qui représentent ces variations, la concavité d'une telle courbe étant orientée vers le haut ou le bas selon que la charge est positive ou négative.

Le transfert d'électrons s'effectue comme dans la structure transposée entre le réservoir (couche 1B1) et le puits (couche 1P). Le diagramme de bandes n'est pas modifié dans cette partie de la structure.

L'écart entre la limite inférieure de la bande de conduction et le niveau de Fermi dans la barrière est augmenté par rapport à la structure transposée. La densité électronique et la densité de courant y sont donc diminuées. Une telle diminution apparaît notamment avantageuse lorsque le troisième matériau est l'InP et les premier et deuxième matériaux comportent en outre de l'arsenic et/ou du gallium.

## Revendications

**1/** Dispositif électro-optique semi-conducteur modulable à puits de potentiel, une structure modulatrice de ce dispositif étant constituée de couches superposées, une de ces couches formant un réservoir (1R1) pour des porteurs de charges d'un premier signe qu'une tension de commande injecte dans une autre couche constituant un puits de potentiel (1P) pour commander une caractéristique optique de ce puits, le courant interne induit par cette tension étant limité par un groupe de couches constituant une barrière (1B) dont la résistance électrique est accrue par une raréfaction de ces porteurs sous l'effet d'une charge d'espace de ce premier signe formée par une couche (1B3) de cette barrière,
ce dispositif étant caractérisé par le fait qu'une autre couche (1B1) de cette barrière (1B) forme une charge d'espace du deuxième signe plus petite que la charge d'espace du premier signe (1B3) et située entre cette dernière et le réservoir de porteurs (1R1) grâce à quoi ces porteurs sont encore plus raréfiés dans cete barrière.

**2/** Dispositif selon la revendication 1, ladite structure modulatrice comportant :
- une plaquette (2) constituée de couches de divers matériaux semi-conducteurs en continuité cristalline,
- chacun des ces matériaux ayant une bande interdite qui est un intervalle d'énergie interdit aux électrons et qui présente une largeur propre à ce matériau, ces matériaux pouvant conduire le courant électrique par des porteurs d'un premier ou d'un deuxième type portant respectivement des charges électriques d'un premier ou d'un deuxième signe, l'un de ces types étant constitué par des électrons portant des charges négatives, l'autre par des trous portant des charges positives, ces matériaux pouvant présenter un dopage d'un premier ou d'un deuxième type apte à fournir, respectivement, des porteurs du premier ou du deuxième type,
- ces couches formant une succession de couches selon un ordre de succession allant d'arrière en avant à partir d'une face arrière (4) jusqu'à une face avant (6) de cette plaquette, cette succession contenant au moins une fois une structure élémentaire (S1) constituée par quatre groupes de couches comportant chacun au moins une couche, ces groupes et ces couches présentent l'ordre de succession suivant :
- un groupe réservoir (1R) formé par un premier matériau dont la bande interdite présente une première largeur (LR), une couche de ce groupe présentant un dopage du premier type suffisant pour la rendre conductrice, cette couche constituant un réservoir (1R1) pour fournir des porteurs du premier type,
- un groupe constituant un puits de potentiel (1P), ce puits étant formé d'une couche d'un deuxième matériau dont la bande interdite présente une deuxième largeur (LP) plus petite que la première,
- un groupe constituant une barrière (1B), cette barrière étant formée d'un troisième matériau dont la bande interdite présente une troisième largeur (LB) plus grande que la première, cette barrière comportant une couche antérieure de barrière (1B2, A1B2), puis une couche présentant un dopage du deuxième type et constituant une couche de charge du premier signe (1B3, A1B3), puis une couche postérieure de barrière (1B4, A1B4),
- et un groupe constituant un récepteur (2R1), ce récepteur étant formé d'un matériau dont la bande interdite présente une largeur (LR) supérieure à la deuxième et inférieure à la troisième, une couche de ce groupe présentant un dopage du premier type suffisant pour la rendre conductrice et recueillir les porteurs du premier type,
- les dopages et les épaisseurs du réservoir (1R1, A1R1) et du récepteur (2R1, A2R1) étant choisis suffisamment grands et le dopage et l'épaisseur de la couche de charge du premier signe (1B3, A1B3) étant choisis suffisamment petits pour que les porteurs de charge présents dans cette plaquette soient sensiblement seulement du premier type, de sorte que ladite couche de charge du premier signe forme une charge d'espace localisée du premier signe d'autant plus grande que son dopage et son épaisseur sont plus grands, ledit groupe barrière (1B) présentant une charge d'espace globale du premier signe résultant de la présence de cette charge d'espace localisée,
- cette charge d'espace globale du premier signe étant choisie suffisamment grande pour que ledit puits de potentiel soit sensiblement vide de porteurs en l'absence de courant électrique,
- ladite troisième largeur de bande interdite (LB) et cette charge d'espace globale du premier signe étant choisies suffisamment grandes pour que la barrière (1B) présente une résistance électrique,
- ce modulateur comportant en outre:
- deux électrodes arrière (8) et avant (10) sur ses dites faces arrière (4) et avant (6), respectivement,
- une source électrique commandable (12) pour appliquer une tension de commande de cette électrode avant vers cette électrode arrière de manière qu'un courant électrique interne injecte des porteurs du premier type dans ledit puits de potentiel à partir du réservoir, grâce à quoi cette tension commande la densité de ces porteurs dans ce puits et cette densité commande un seuil d'absorption optique de ce puits, ces porteurs étant évacués de ce puits vers le récepteur à travers la barrière, l'intensité de ce courant interne étant limitée par la résistance électrique de la barrière,
- et des moyens de guidage de lumière (14) pour diriger un faisceau lumineux incident (16) vers le puits de potentiel de manière que ce faisceau traverse ce puits et en ressorte sous la forme d'un faisceau émergent (18) commandé en intensité et/ou direction et/ou phase par ladite tension de commande,
- ce dispositif étant caractérisé par le fait que ladite barrière (1B) comporte en outre une couche de charge du deuxième signe (1B1) précédant ladite couche antérieure de barrière (1B2) et présentant un dopage du premier type pour faire apparaître une charge d'espace localisée du deuxième signe d'autant plus grande que le dopage et l'épaisseur de cette couche de charge sont plus grands, ladite charge d'espace localisée du premier signe étant choisie plus grande que cette charge d'espace localisée du deuxième signe, ladite charge d'espace globale du premier signe étant constituée par la somme algébrique de cette charge d'espace localisée du premier signe et de cette charge d'espace localisée du deuxième signe, grâce à quoi la résistance électrique de la barrière est accrue.

**3/** Dispositif selon la revendication 2, dans lequel :
ledit puits de potentiel (1P) présente une épaisseur suffisamment petite et ladite deuxième largeur de bande interdite (LP) est suffisamment petite pour supprimer un degré de liberté des porteurs du premier type pouvant s'y trouver, grâce à quoi ce puits constitue un puits quantique.

**4/** Dispositif selon la revendication 2, dans lequel ledit groupe réservoir (1R) comporte, en avant dudit réservoir (1R1), une couche de sortie du réservoir (1R2) présentant une résistivité.

**5/** Dispositif selon la revendication 2, dans lequel ledit récepteur est formé dudit premier matériau.

**6/** Dispositif selon la revendication 2, dans lequel ladite succession de couches comporte une succession de dites structures élémentaires.

**7/** Dispositif selon la revendication 2, dans lequel lesdits porteurs du premier type sont des électrons.

**8/** Dispositif selon la revendication 2, dans lequel ledit troisième matériau est le phosphure d'indium, lesdits premier et deuxième matériaux contenant l'indium et, en outre, de l'arsenic et/ou du gallium.

**9/** Dispositif selon la revendication 8 dans lequel lesdits premier et deuxième matériaux répondent à la formule Ga₁₋ₓInₓAs_{y}P_{1-y} avec deux valeurs différentes pour au moins l'un des deux paramètres x et y.

**10/** Dispositif selon la revendication 8, dans lequel ledit premier matériau répond à la formule Ga₁₋ₓInₓAs_{y}P_{1-y}, ledit deuxième matériau répondant à la formule Ga₁₋ₓInₓAs.
